# EUROPEAN PATENT SPECIFICATION

(11) **EP 4 499 737 B1**
(45) Date of publication and mention of the grant of the patent: **10.12.2025**
(21) Application number: 23714651.9
(22) Date of filing: 21.03.2023
(51) Int. Cl.: B01D 61/48, H01M 8/1069, H01M 8/1018, C08J 5/22, B01D 61/42

(54) **MEMBRANES**
MEMBRANEN
MEMBRANES

(30) Priority: 31.03.2022 GB 202204631
(43) Date of publication of application: 05.02.2025
(73) Proprietor: Fujifilm Manufacturing Europe BV, 5047 TK Tilburg (NL); FUJIFILM Corporation, Tokyo 106-8620 (JP)
(72) Inventor: HESSING, Jacko, 5047 TK Tilburg (NL); HUERTA MARTINEZ, Elisa, 5047 TK Tilburg (NL)
(74) Representative: HGF
(86) International application number: PCT/EP2023/057181
(87) International publication number: WO 2023/186620

(56) References cited:
- EP-A2- 0 600 470
- WO-A1-2022/049193
- US-A1- 2016 354 771

## Description

The present invention relates to cation exchange membranes, to compositions suitable for making cation exchange membranes and to their preparation and use.

Ion exchange membranes are used in electrodialysis, reverse electrodialysis, electrolysis, diffusion dialysis and a number of other processes. Typically the transport of ions through the membranes occurs under the influence of a driving force such as an ion concentration gradient or, alternatively, an electrical potential gradient.

Ion exchange membranes are generally categorized as cation exchange membranes ("CEM"s) or anion exchange membranes ("AEM"s), depending on their predominant charge. CEMs comprise negatively charged groups that allow the passage of cations but reject anions, while AEMs comprise positively charged groups that allow the passage of anions but reject cations. Some ion exchange membranes comprise a porous support which provides mechanical strength. Such membranes are often called "composite membranes" due to the presence of both an ionically charged polymer which discriminates between oppositely charged ions and the porous support which provides mechanical strength.

CEMs may be used for the treatment of aqueous solutions and other polar liquids, and for the generation of electricity.

Electricity may be generated using reverse electrodialysis (RED) in which process standard ion exchange membranes may be used. CEMs may also be used for the generation of hydrogen, e.g. in fuel cells and batteries or the generation of bases e.g. in bipolar electrodialysis.

CEMs may be prepared by curing compositions comprising copolymerisable components, at least one of which contains an anionic group. One of the problems of such curable compositions is that they can be unstable, that is, they might phase separate leading to inhomogeneities in the final polymer. These inhomogeneities may cause unexpectedly high electrical resistance and/or decreased perm selectivity, making their use expensive. Furthermore, many CEMs are brittle (low E Modulus).

Prior art US 2016/354771 A1 relates to a curable composition that has excellent performances as a cation exchange membrane and said cured composition having low water permeability and electrical resistance of a film and high selective permeability.

According to a first aspect of the present invention there is provided a cation exchange membrane obtainable by curing a composition comprising:
(a) 40 to 70 wt.% of a first crosslinking agent comprising an anionic group and at least two polymerisable groups;
(b) 1 to 15 wt.% of a second crosslinking agent comprising at least 5 and less than 75 vinyl groups and being free from ionic groups; and
(c) 2 to 20 wt.% of a third crosslinking agent comprising 2, 3 or 4 polymerisable groups and being free from ionic groups.

In this document (including its claims), the verb "comprise" and its conjugations is used in its non-limiting sense to mean that items following this word are included, but items not specifically mentioned are not excluded. In addition, reference to an element by the indefinite article "a" or "an" does not exclude the possibility that more than one of the elements is present, unless the context clearly requires that there be one and only one of the elements. The indefinite article "a" or "an" thus usually mean "at least one".

Component (a) may contain one first crosslinking agent or more than one first crosslinking agent, e.g. 2, 3 or 4 first crosslinking agents, each comprising an anionic group and at least two polymerisable groups.

The first crosslinking agent preferably comprises a bissulphonylimide group (-SO₂-N⁻-SO₂-) as anionic group and at least two polymerisable groups. The first crosslinking agent preferably further comprises at least one aromatic group, preferably a C₆-C₁₀-aryl group. More preferably the at least one aromatic group is a phenyl group.

Preferred polymerisable groups comprise ethylenically unsaturated groups and thiol groups (e.g. alkylenethiol, preferably -C₁₋₃-SH). Optionally the polymerisable groups further comprise an optionally substituted alkylene group (e.g. optionally substituted C₁₋₆-alkylene) and/or an optionally substituted arylene group (e.g. optionally substituted C₆₋₁₈-arylene). The preferred substituents, when present, include C₁₋₄-alkyl, C₁₋₄-alkoxy, sulpho, carboxy and hydroxyl groups.

Preferred ethylenically unsaturated groups include vinyl groups, (meth)acrylic groups (e.g. CH₂=CR¹-C(O)- groups), especially (meth)acrylate groups (e.g. CH₂=CR¹-C(O)O- groups) and (meth)acrylamide groups (e.g. CH₂=CR¹-C(O)NR¹- groups), wherein each R¹ independently is H or CH₃). Most preferred ethylenically unsaturated groups comprise or are vinyl groups (CH₂=CH- groups).

Preferably components (a), (b) and (c) can be polymerised by exposure to actinic radiation, thermally and/or by electron beam initiation. When component (a) or (c) comprises an ethylenically unsaturated group (e.g. a vinyl group), such group is preferably attached to an aromatic carbon atom such as a benzene ring, e.g. as in divinylbenzene. When component (a) or (c) comprises a thiol group such group is preferably attached to a non-aromatic carbon atom.

Preferably the first crosslinking agent is free from fluoro groups. Fluoro groups are F atoms covalently bound to a carbon atom. Fluoro groups are not preferred because crosslinking agents having fluoro groups are less soluble in aqueous liquids and because of the environmental issue generally associated with fluorinated compounds.

Preferably the first crosslinking agent is free from chloro groups. Chloro groups are Cl atoms covalently bound to a carbon atom.

The first crosslinking agent preferably comprises a group of Formula (I): 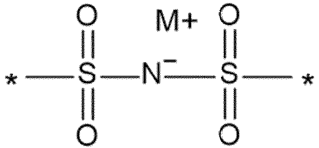 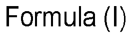 wherein M⁺ is a cation and * indicates the attachment points to other elements of the crosslinking agent.

M⁺ is preferably an ammonium cation or an alkali metal cation, especially Li⁺. When M⁺ is Li⁺ the resultant components have particularly good solubility in water and aqueous liquids.

Component (a) is preferably of the Formula (Ia): 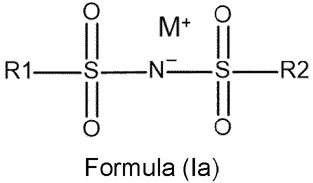 wherein at least one of R1 and R2, comprises one or more polymerisable groups, provided that the compound of Formula (Ia) comprises at least two polymerisable groups. M⁺ is as herein before defined.

R1 and/or R2 may comprises non-polymerisable groups.

Preferred non-polymerisable groups include amino, alkyl (especially C₁₋₄-alkyl) and aryl (especially phenyl or naphthyl), each of which is unsubstituted or carries one or more non-polymerisable substituents, e.g. C₁₋₄-alkyl, C₁₋₄-alkoxy, amino, C₁₋₄-alkyamine, sulpho, carboxy, or hydroxyl group.

Preferably the first crosslinking agent is of Formula (II): 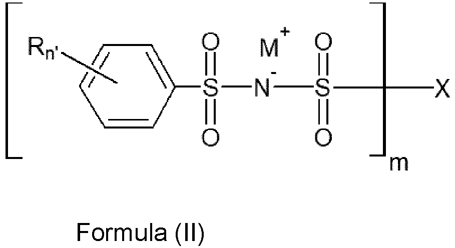 wherein:
- n': has a value of 1 or 2*;*
- m: has a value of 1 or 2;
- M⁺: is as herein before defined;
- each R: is independently a polymerisable or non-polymerisable group; and
- X: is an optionally substituted amine group, an optionally substituted alkylene group (e.g. optionally substituted C₁₋₆-alkylene) or an optionally substituted arylene group (e.g. optionally substituted C₆₋₁₈-arylene);
provided that the compound of Formula (II) comprises at least two polymerisable groups (and preferably is free from fluoro groups).

Preferably R or each R independently is a vinyl group or a (C₁₋₃-alkylene)thiol group, an amino group, an alkyl group (especially C₁₋₄-alkyl) or an aryl group (especially phenyl or naphthyl).

For example, when m=1 and X is amino R is a polymerisable group and n' is 2. Preferably R is a vinyl group or a (C₁₋₃-alkylene)thiol group.

Thus R may be a vinyl group, an optionally substituted thiol group or non-polymerisable group (as defined above).

The preferred substituents in X, when present, include C₁₋₄-alkyl, C₁₋₄-alkoxy, sulpho, carboxy, and hydroxyl groups.

In a preferred embodiment the compound of Formula (II) comprises 2, 3 or 4 polymerisable groups and especially 2 (and only 2) polymerisable groups.

In a preferred embodiment, component (a) is of Formula (II) wherein m and n' both have a value of 1, X is a phenylene group carrying a vinyl group or a (C₁₋₃-alkylene)thiol group and R is a polymerisable group, preferably a vinyl group or a (C₁₋₃-alkylene)thiol group, and M⁺ is as herein before defined.

In another preferred embodiment, component (a) is of Formula (II) wherein m has a value of 2, X is a C₁₋₆-alkylene, or C₆₋₁₈-arylene group or X is a group of the formula NR" wherein each R" independently is H or C₁₋₄⁻alkyl and R and M⁺ are as hereinbefore defined.

In a preferred embodiment, the first crosslinking agent is of Formula (II) wherein m has a value of 1, n' has a value of 2, X is a C₁-₆-alkyl, or C₆-₁₈-aryl group or a group of the formula N(R")₂ wherein each R" independently is H or C₁-₄-alkyl and R is a polymerisable group, preferably a vinyl group or a (C₁₋₃-alkylene)thiol group, and M⁺ is as herein before defined.

Illustrative synthesis methods for the first crosslinking agent can be found in the examples section below. Furthermore, many of the first crosslinking agents may be prepared by a process comprising the steps of:
(i) providing a sulphonyl halide (e.g. chloride, bromide or fluoride) compound;
(ii) reacting the sulphonyl halide group of component (i) with a compound comprising a sulphonamide group to obtain component (a) (e.g. of Formula (Ia) or (II));
wherein at least one of component (i) and component (ii) comprises at least one polymerisable group or a precursor thereof, preferably a vinyl group or thiol group. Preferably either component (i) or component (ii) comprises an aryl group, e.g. a phenylene group. For instance, component (i) may be a benzenesulphonyl chloride and component (ii) a sulphonamide,

In the illustrative synthesis method described above typically the vinyl group or (C₁₋₃-alkylene)thiol group is attached to a benzene ring of component (i) and/or (if present) of component (ii). In a preferred embodiment the sulphonyl halide compound used in the process comprises one or more vinyl groups, more preferably one or two vinyl groups, e.g. vinylbenzenesulphonyl halide or divinylbenzenesulphonyl halide.

The composition comprises 40 to 70wt%, preferably 45 to 65wt% of component (a) (i.e. first crosslinking agent(s)), especially 55 to 62wt%.

Examples of the first crosslinking agents which may be used alone or in combination as component (a) include the following compounds:

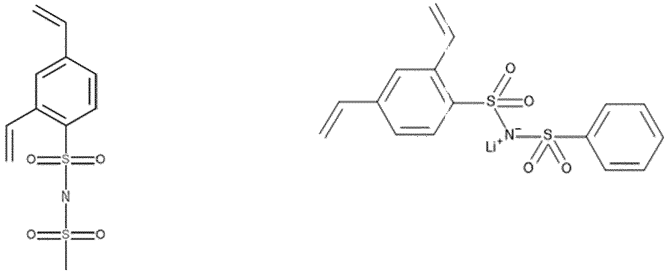

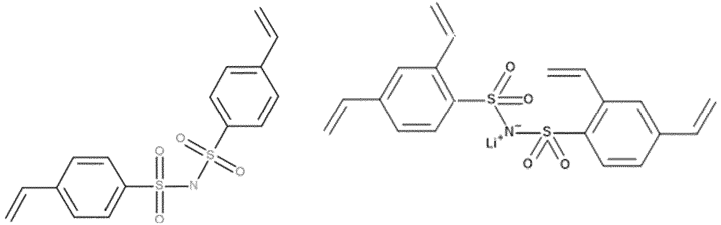

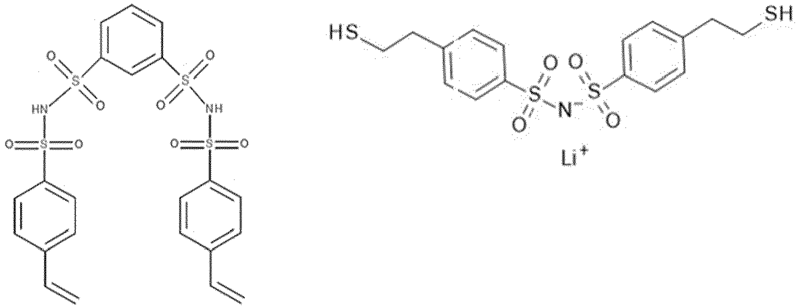

Component (b) may contain one second crosslinking agent or more than one second crosslinking agent, e.g. 2, 3 or 4 second crosslinking agents, each comprising at least 5 vinyl groups and being free from ionic groups.

Preferably the second crosslinking agent is a curable compound of Formula (III):

R'-Aₙ-Bₘ-C_{q}-R' Formula (III)

wherein:
- A: is [CH₂CH=CHCH₂];
- B: is [CH₂CH(CH=CH₂)];
- C: is [CH₂CH(C₆H₅)];
- n: has a value of from 5 to 80% of the sum of (n+m+q);
- m: has a value of from 20 to 95% of the sum of (n+m+q);
- q: has a value of from 0 to 30% of the sum of (n+m+q); and
- each R': independently is H or OH;
provided that the curable compound of Formula (III) comprises at least 5 vinyl groups and is free from ionic groups.

In Formula (III) groups represented by A are each independently in the cis or the trans configuration.

Preferably the curable compound of Formula (III) is a random, linear copolymer. The groups shown in brackets in Formula (III) (i.e. [CH₂CH=CHCH₂]ₙ, [CH₂CH(CH=CH₂)]ₘ and [CH₂CH(C₆H₅)]_{q}) are preferably distributed randomly in Formula (III). Thus the groups shown in brackets in Formula (III) are preferably not in the form of continuous blocks and the curable compound of Formula (III) is preferably not a diblock or triblock copolymer.

Groups A and B in Formula (III) comprise ethenyl groups derived from butadiene. Thus in one embodiment component (b) may be obtained by a process comprising polymerisation of a composition comprising butadiene monomers (and optionally styrene monomers, the latter being represented by group C in Formula (III).

Preferably the second crosslinking agent comprises at least 8 vinyl groups, more preferably at least 10 vinyl groups.

The second crosslinking agent is free from ionic compounds, e.g. free from sulphonic acid and sulphonate groups.

The values of n, m and q define the proportion, numerically, of each of the groups A, B and C respectively in the compound of Formula (III) relative to the total amount of the groups A, B and C (i.e. (n+m+q)) in the compound of Formula (III).

Preferably n has a value 5% to 80%, more preferably 10% to 75% and especially 15% to 72% of the sum of (n+m+q).

Preferably m has a value 20% to 95%, more preferably 25% to 90% and especially 28% to 85% of the sum of (n+m+q).

Preferably q has a value 0 to 25% of the sum of (n+m+q).

The values of n, m and q are therefore numbers and herein they are expressed as a % relative to the total number of (n+m+q) groups. In each molecule of Formula (III) n, m and q are integers, although typically component (b) comprises a mixture of compounds of Formula (III) and so the average value of n, m and q for component (b) as a whole will typically not be an integer.

Preferably the absolute value of (n+m+q) is 6 to 270, more preferably 10 to 145, especially 19 to 130.

The absolute value of m is preferably 5 to 75, more preferably 6 to 70, especially 8 to 60.

The absolute value of n is preferably 1 to 250, more preferably 2 to 170, especially 2 to 100.

The absolute value of q is preferably 0 to 80, more preferably 0 to 50, especially 0 to 40.

Preferably the number of vinyl groups in the second crosslinking agent (component (b)) is at least 10 and especially at least 12.

In a preferred embodiment, the second crosslinking agent is of the Formula (IV): 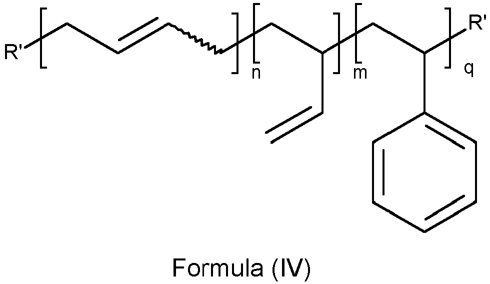 wherein n, m, q and each R' independently are as hereinbefore defined and preferred in relation to Formula (III).

The second crosslinking agent comprises less than 75 vinyl groups, preferably less than 70, especially less than 60 vinyl groups.

Optionally, the second crosslinking agent comprises styrene groups. Such styrene groups are preferably distributed randomly within the second crosslinking agent.

Examples of the second crosslinking agent which may be used as or in component (b) include polybutadiene polymers (especially through predominantly 1,2-addition), styrene-butadiene copolymers (especially through predominantly 1,2-addition) such polymers carrying one or more (especially two) OH groups, provided that such polymers comprise at least 5 vinyl groups and are free from ionic groups. Such materials can be obtained from commercial sources, e.g. from Cray Valley Technologies (e.g. under the names of Ricon^{®}, Krasol^{®}, Poly bd^{®}) or Nippon Soda Co, Ltd (e.g. under the name of Nisso-PB^{™}).

The second crosslinking agent preferably has a melting point below 50°C, more preferably below 40°C, especially below 30°C, more especially below 15°C.

The second crosslinking agent preferably has a viscosity not higher than 600 Poise, more preferably less than 400 Poise, especially lower than 200 Poise, more especially below 100 Poise, when measured at 25°C by a suitable viscosity meter such as a Brookfield DVII viscosity meter equipped with a SC4-18 conical spindle and operated at 60 rpm. When the second crosslinking agent has the above preferred melting point and/or viscosity then manufacturing of the cation exchange membrane is facilitated.

The composition comprises a total of 1 to 15wt% of component (b) (i.e. second crosslinking agent(s)), preferably 2 to 10wt%.

Component (c) may contain one third crosslinking agent or more than one third crosslinking agent, e.g. 2, 3 or 4 third crosslinking agents, each comprising 2, 3 or 4 polymerisable groups and being free from ionic groups.

As the third crosslinking agent is free from ionic groups it does not comprise any carboxylic acid, bissulphonylimide, sulphonic acid or sulphonate groups.

In some embodiments the third crosslinking agent comprises an aromatic group, e.g. a phenylene, naphthylene or triazine group. In other embodiments the third crosslinking agent is free from aromatic groups.

In one embodiment the third crosslinking agent is of Formula (V):

R‴ₙ-A' Formula (V)

wherein:
each R‴ independently comprises a polymerisable group or a non-polymerisable group;
n has a value of 2, 3 or 4; and
A' is a linking group;
provided that the compound of Formula (V) comprises 2, 3 or 4 polymerisable groups and is free from ionic groups.

The polymerisable groups present in R‴ in Formula (V) include ethylenically unsaturated groups and thiol groups (e.g. alkylenethiol, preferably -C₁₋₃-SH). Preferred ethylenically unsaturated groups are as described above in relation to the first crosslinking agent.

The non-polymerisable groups in R‴ include amino, alkyl (especially C₁₋₄-alkyl) and aryl (especially phenyl or naphthyl), each of which is unsubstituted or carries one or more non-polymerisable substituents, e.g. C₁₋₄-alkyl, C₁₋₄-alkoxy, amino, C₁₋₄-alkyamine, sulpho, carboxy, or hydroxyl group.

Preferably in Formula (V) each R‴ is a vinyl group, an allyl group or a C₀₋₃-alkylene-thiol group.

The third crosslinking agent may be obtained commercially or by methods known in the art

Preferably the third crosslinking agent is free from fluoro and/or chloro groups.

In Formula (V) the group A' is preferably N (a nitrogen atom) or an optionally substituted alkylene group (e.g. optionally substituted C₁₋₆-alkylene) or an optionally substituted arylene group (e.g. optionally substituted C₆-₁₈-arylene). The preferred substituents, when present, include C₁₋₄-alkyl, C₁₋₄-alkoxy and hydroxyl groups.

In a preferred embodiment, in Formula (V):
(i) each R‴ independently comprises a polymerisable group, n has a value of 2, 3 or 4 and A' is C₁₋₆-alkylene or C₆₋₁₈-arylene; or
(ii) A' is N, n has a value of 3 and either all three of the groups represented by R‴ comprise a polymerisable group or two of the groups represented by R‴ comprise a polymerisable group and the third group represented by R‴ is H or C₁₋₄ alkyl; or
(iii) A' is a triazine group or a cyanuric acid derivative, n has a value of 3 and either all three of the groups represented by R‴ comprise a polymerisable group or two of the groups represented by R‴ comprise a polymerisable group and the third group represented by R‴ is C₁₋₄ alkoxy or C₁₋₄ alkyl.

The third crosslinking agent preferably has a molecular weight below 500 Da, more preferably below 400 Da, especially below 300 Da, more especially below 260. By keeping the molecular weight of the third crosslinking agent low the ion exchange capacity of the CEM of the present invention is not reduced significantly.

In a preferred embodiment the third crosslinking agent is a liquid at the temperature at which the CEM is prepared. Preferably the third crosslinking agent has a melting point below 80°C, more preferably below 50°C, especially below 30°C, more especially below 15°C.

Preferably the boiling point of the second crosslinking agent is at least 150°C, more preferably at least 190°C.

Preferably the vapour pressure of the second crosslinking agent is below 1 mmHg, more preferably below 0.7 mmHg at 20°C or preferably below 135 Pa, more preferably below 100 Pa at 20°C.

Examples of the third crosslinking agents which may be used alone or in combination as component (c) include the following compounds.

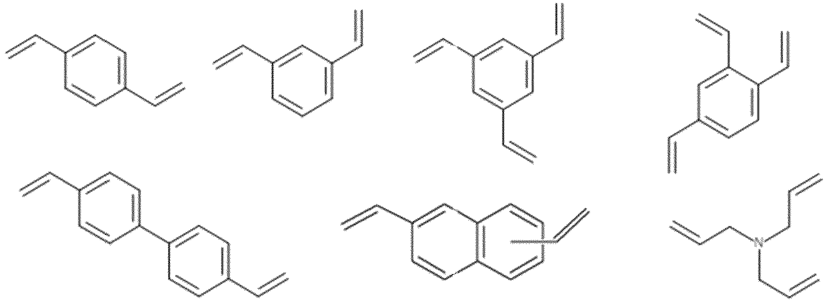

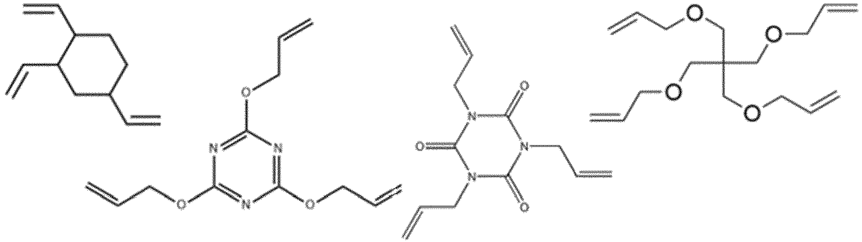

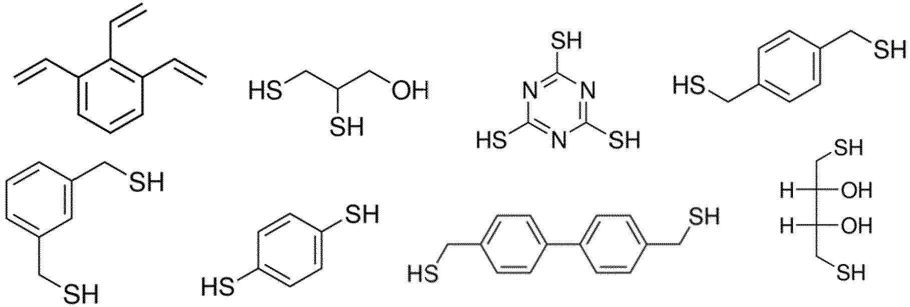

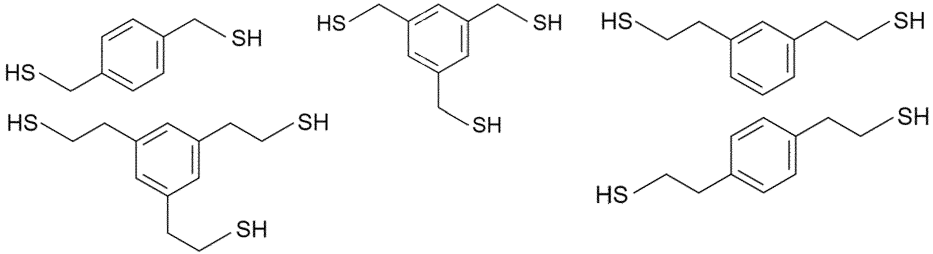

Preferably the polymerisable groups present in the first crosslinking agent(s) and/or the second crosslinking agent(s) are copolymerisable with the polymerisable groups present in the third crosslinking agent(s). For example:
- the polymerisable groups in the first and third crosslinking agents are each independently selected from ethylenically unsaturated groups;
- the polymerisable groups in one of the first and/or third crosslinking agents are/comprise thiol groups and the polymerisable groups in the other of the first and third crosslinking agents are groups which are reactive with thiol groups, e.g. ethylenically unsaturated groups.

The second crosslinking agent comprises vinyl groups.

Preferably component (c) comprises divinylbenzene, 2,4,6-triallyloxy-1,3,5-triazine, 1,3,5-triallylisocyanurate, triallylamine, 1,2,4-trivinylcyclohexane, tetra(allyloxy)ethane, pentaerythritol tetraallyl ether, 2,3-dimercapto-1-propanol, dithioerythritol, trithiocyanuric acid, 1,3 or 1,4-benzenedimethanethiol or a combination thereof.

Preferably the composition comprises 2 to 20wt%, most preferably 5 to 15%wt% of component (c), i.e. the third crosslinking agent.

The composition for preparing the cation exchange membrane of the present invention preferably comprises an amount of component (a) in a weight ratio compared to the sum of the amounts of components (b) and (c) in the range 3 to 25 (i.e. 3:1 to 25:1).

The molar ratio of component (a) to the sum of the molar amounts of components (b) and (c) is preferably in the range 2 to 12 (i.e. 2:1 to 12:1).

The weight ratio of component (b) to component (c) is preferably in the range 0.2 to 5 (i.e. 1:5 to 5:1).

The molar ratio of component (b) to (c) is preferably in the range 0.01 and 0.5 (i.e. 1:100 to 1:2).

The cation exchange membrane according to the first aspect of the present invention is obtainable by curing a composition comprising:
(a) component (a) as defined above;
(b) component (b) as defined above;
(c) component (c) as defined above;

optionally (d) a compound comprising one and only one polymerisable group;
optionally (e) a radical initiator; and
optionally (f) a solvent.

The abovementioned composition forms a second aspect of the present invention

The preferred amounts of components (a), (b) and (c) and the preferred ratios of (a), (b) and (c) in the above composition and in the composition according to the second aspect of the invention are as described above in relation to the first aspect of the present invention.

Optionally the composition comprises 0 to 40 wt%, more preferably 5 to 30% wt%, most preferably 6 to 25 wt%, of component (d).

Optionally the composition comprises 0 to 10 wt%, more preferably 0.001 to 5 wt%, most preferably 0.005 to 2 wt%, of component (e).

Optionally the composition comprises 0 to 40 wt%, more preferably 10 to 40 wt%, most preferably 15 to 35 wt%, of component (f).

Component (d) may contain one a compound comprising one and only one polymerisable group or more than one compound comprising one and only one polymerisable group. Preferably component (d) comprises an anionic group.

The preferred polymerisable group which may be present in the compound(s) comprising one and only one polymerisable group is as defined above in relation to component (a), especially a vinyl group, e.g. in the form of allylic or styrenic group. Styrenic groups are preferred over e.g. (meth)acrylic groups because the resultant CEMs have particularly good stability over a wide pH range and this makes the CEMs particularly useful for fuel cells.

Examples of compounds which comprise one and only one polymerisable group include the following compounds of Formula (MB-α), (AM-B) and Formula (VI): 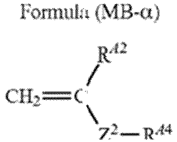 wherein in Formula (MB-α),
- R^{A2}: represents a hydrogen atom or an alkyl group;
- R^{A4}: represents an organic group comprising a sulpho group in free acid or salt form and having no ethylenically unsaturated group; and
- Z²: represents -(C=O)NRa-, wherein Ra represents a hydrogen atom or an alkyl group, preferably a hydrogen atom.
Examples of compounds of Formula (MB-α) include: 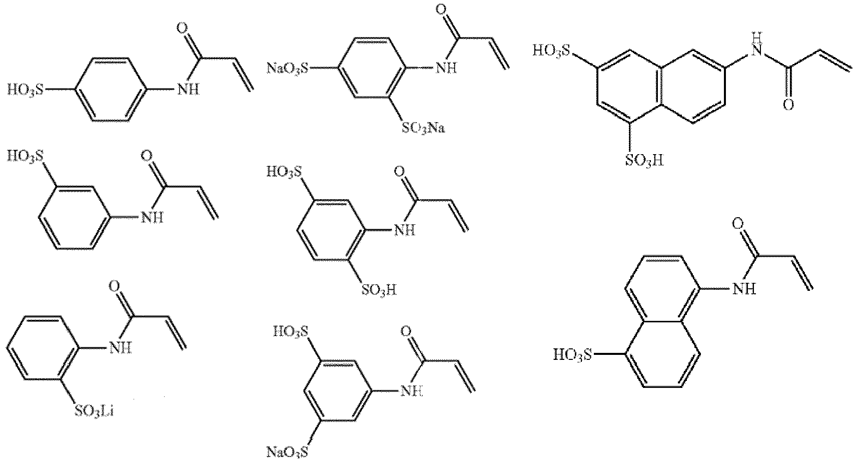 Synthesis methods for compounds of Formula (MB-α) can be found in e.g. US2015/0353696. 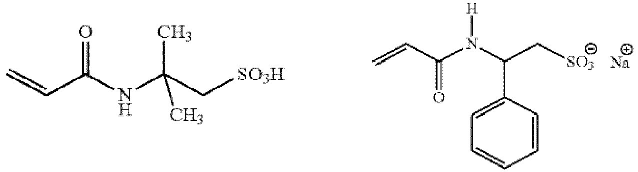 Synthesis methods for the above compounds can be found in e.g. US2016/0369017. 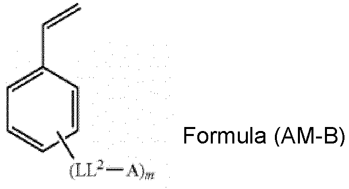 wherein in Formula (AM-B):
- LL²: represents a single bond or a bivalent linking group; and
- A: represents a sulpho group in free acid or salt form; and
- m: represents 1 or 2.
Examples of compounds of Formula (AM-B) include: 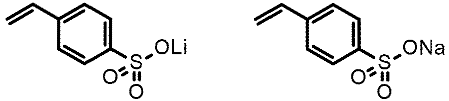 Such compounds of Formula (AM-B) are commercially available, e.g. from Tosoh Chemicals and Sigma-Aldrich. 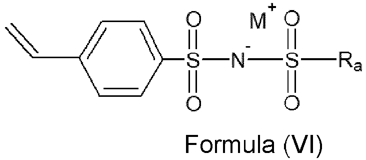 wherein
- Rₐ: in Formula (VI) is C₁₋₄ alkyl, NH₂ or C₆-₁₂-aryl; and
- M⁺: is a cation, preferably H⁺, Li⁺, Na⁺, K⁺ or NL₄⁺ wherein each L independently is H or C₁-₃-alkyl.

Examples of compounds of Formula (VI) include:

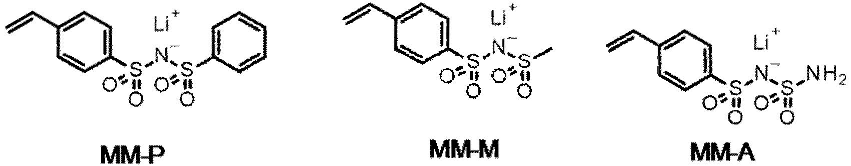

Synthesis methods for the above compounds having the MM prefix are known from literature.

Preferably component (d) comprises one or more compounds of Formula (AM-B) and/or Formula (VI) because this can result in CEMs having especially good stability in the pH range 0 to 14.

Component (e) may contain one radical initiator or more than one radical initiator.

Preferred radical initiators include thermal initiators and photoinitiators.

Examples of suitable thermal initiators which may be used as component (e) include 2,2'-azobis(2-methylpropionitrile) (AIBN), 4,4'-azobis(4-cyanovaleric acid), 2,2'-azobis(2,4-dimethyl valeronitrile), 2,2'-azobis(2-methylbutyronitrile), 1,1'-azobis(cyclohexane-1-carbonitrile), 2,2'-azobis(4-methoxy-2,4-dimethyl valeronitrile), dimethyl 2,2'-azobis(2-methylpropionate), 2,2'-azobis[N-(2-propenyl)-2-methylpropionamide, 1-[(1-cyano-1-methylethyl)azo]formamide, 2,2'-Azobis(N-butyl-2-methylpropionamide), 2,2'-Azobis(N-cyclohexyl-2-methylpropionamide), 2,2'-Azobis(2-methylpropionamidine) dihydrochloride, 2,2'-Azobis[2-(2-imidazolin-2-yl)propane]dihydrochloride, 2,2'-Azobis[2-(2-imidazolin-2-yl)propane]disulphate dihydrate, 2,2'-Azobis[N-(2-carboxyethyl)-2-methylpropionamidine] hydrate, 2,2'-Azobis{2-[1-(2-hydroxyethyl)-2-imidazolin-2-yl]propane} dihydrochloride, 2,2'-Azobis[2-(2-imidazolin-2-yl)propane], 2,2'-Azobis(1-imino-1-pyrrolidino-2-ethylpropane) dihydrochloride, 2,2'-Azobis{2-methyl-N-[1,1-bis(hydroxymethyl)-2-hydroxyethl]propionamide}, 2,2'-Azobis[2-methyl-N-(2-hydroxyethyl)propionamide] and combinations of two or more thereof.

Examples of suitable photoinitiators which may be included in the composition as component (e) include aromatic ketones, acylphosphine compounds, aromatic onium salt compounds, organic peroxides, thio compounds, hexa-arylbiimidazole compounds, ketoxime ester compounds, borate compounds, azinium compounds, metallocene compounds, active ester compounds, compounds having a carbon halogen bond, and an alkyl amine compounds. Preferred examples of the aromatic ketones, the acylphosphine oxide compound, and the thio-compound include compounds having a benzophenone skeleton or a thioxanthone skeleton described in "RADIATION CURING IN POLYMER SCIENCE AND TECHNOLOGY", pp.77-117 (1993) and combinations of two or more thereof. More preferred examples thereof include an alpha-thiobenzophenone compound described in JP1972-6416B (JP-S47-6416B), a benzoin ether compound described in JP1972-3981B (JP-S47-3981B), an alpha-substituted benzoin compound described in JP1972-22326B (JP-S47-22326B), a benzoin derivative described in JP1972-23664B (JP-S47-23664B), an aroylphosphonic acid ester described in JP1982-30704A (JP-S57-30704A), dialkoxybenzophenone described in JP1985-26483B (JP-S60-26483B), benzoin ethers described in JP1985-26403B (JP-S60-26403B) and JP1987-81345A (JPS62-81345A), alpha-amino benzophenones described in JP1989-34242B (JP H01-34242B), U.S. Pat. No. 4,318,791A, and EP0284561A1, p-di(dimethylaminobenzoyl) benzene described in JP1990-211452A (JP-H02- 211452A), a thio substituted aromatic ketone described in JP1986-194062A (JPS61-194062A), an acylphosphine sulphide described in JP1990-9597B (JP-H02- 9597B), an acylphosphine described in JP1990-9596B (JP-H02-9596B), thioxanthones described in JP1988-61950B (JP-S63-61950B), and coumarins described in JP1984-42864B (JP-S59-42864B). In addition, the photoinitiators described in JP2008-105379A and JP2009-114290A are also preferable. In addition, photoinitiators described in pp. 65 to 148 of "Ultraviolet Curing System" written by Kato Kiyomi (published by Research Center Co., Ltd., 1989) may be used.

Preferred photoinitiators include Norrish Type II photoinitiators having an absorption maximum at a wavelength longer than 380nm, when measured in one or more of the following solvents at a temperature of 23°C: water, ethanol and toluene. Examples include a xanthene, flavin, curcumin, porphyrin, anthraquinone, phenoxazine, camphorquinone, phenazine, acridine, phenothiazine, xanthone, thioxanthone, thioxanthene, acridone, flavone, coumarin, fluorenone, quinoline, quinolone, naphtaquinone, quinolinone, arylmethane, azo, benzophenone, carotenoid, cyanine, phtalocyanine, dipyrrin, squarine, stilbene, styryl, triazine, anthocyaninderived photoinitiator and combinations of two or more thereof.

When the composition is cured by electron beam or gamma radiation component (e) is not needed.

Component (f) may contain one solvent or, more typically, more than one solvent.

Preferably the solvent(s) used as component (f) are inert solvents. In other words, preferably the solvent does not react with any of the other components of the composition. In one preferred embodiment component (f) comprises water and optionally an organic solvent, especially where some or all of the organic solvent is water miscible. Water is useful for dissolving component (a) and possibly also component (d), while the organic solvent is useful for dissolving components (b) and (c) and any other organic components present in the composition.

Component (f) is useful for reducing the viscosity and/or surface tension of the composition.

Examples of inert solvents which may be used as or in component (f) include water, alcohol-based solvents, ether-based solvents, amide-based solvents, ketonebased solvents, sulphoxide-based solvents, sulphone-based solvents, nitrile-based solvents and organic phosphorus-based solvents. Examples of alcohol-based solvents which may be used as or in component (f) (especially in combination with water) include methanol, ethanol, isopropanol, n-butanol, diacetone alcohol, methoxypropanol, ethylene glycol, propylene glycol, diethylene glycol, dipropylene glycol and mixtures comprising two or more thereof. In addition, preferred inert, organic solvents which may be used in component (f) include dimethyl sulphoxide, dimethyl imidazolidinone, sulpholane, N-methylpyrrolidone, dimethyl formamide, acetonitrile, acetone, 1,4-dioxane, 1,3-dioxolane, tetramethyl urea, hexamethyl phosphoramide, hexamethyl phosphorotriamide, pyridine, propionitrile, butanone, cyclohexanone, tetrahydrofuran, tetrahydropyran, 2-methyltetrahydrofuran, ethylene glycol diacetate, cyclopentylmethylether, methylethylketone, ethyl acetate, y-butyrolactone and mixtures comprising two or more thereof.

According to a third aspect of the present invention there is provided a process for preparing a cation exchange membrane comprising curing the composition defined in relation to the first aspect of the present invention.

The composition which is cured in the process according to the third aspect of the present invention is preferably as defined in relation to the second aspect of the present invention.

The process for preparing the cation exchange membrane preferably comprises the steps of:
i. providing a porous support;
ii. impregnating the porous support with the composition (preferably the composition of the second aspect of the present invention); and
iii. curing the composition.

The preferences for the composition used in the process of the third aspect of the present invention are as described herein in relation to the first and second aspects of the present invention.

Preferably the process according to the third aspect of the present invention comprises a first curing step and a second curing step (dual curing). In a preferred embodiment the composition is cured first by photocuring, e.g. by irradiating the composition by ultraviolet or visible light, or by gamma or electron beam radiation, and thereby causing curable components present in the composition to polymerise, and then applying a second curing step. The second curing step preferably comprises thermal curing, gamma irradiation or EB irradiation (thereby causing curable components present in the composition to further polymerise thereby increasing the network density) whereby the second curing step preferably applies a different method than the first curing step. When gamma or electron beam irradiation is used in the first curing step preferably a dose of 60 to 120 kGy, more preferably a dose of 80 to 100 kGy is applied.

In one embodiment the process according to the third aspect of the present invention comprises curing the composition in a first curing step (e.g. UV curing or electron beam (EB) curing) to form a CEM, winding the CEM onto a core (optionally together with an inert polymer foil) and then performing a second curing step (e.g. thermal curing). In another embodiment the process comprises curing the composition in a first curing step (e.g. UV curing) to form a CEM, performing a second curing step (e.g. EB curing) and then winding the CEM onto a core (optionally together with an inert polymer foil).

In a preferred embodiment the first and second curing steps are respectively selected from (i) UV curing then thermal curing; (ii) UV curing then electron beam curing; and (iii) electron beam curing then thermal curing.

The composition preferably comprises 0.05 to 5wt% of radical initiator for the first curing step. The composition optionally further comprises 0 to 5 wt% of a second radical initiator for the second curing step. When it is intended to cure the composition thermally or using light (e.g. UV or visible light) the composition preferably comprises 0.001 to 2wt%, depending on the selected radical initiator(s), in some embodiments 0.005 to 0.9wt%, of component (e).

As mentioned above, component (e) may comprise more than one radical initiator, e.g. a mixture of several photoinitiators (for UV curing) or a mixture of photoinitiators and thermal initiators (for UV and thermal curing). Alternatively a second curing step is performed using gamma or EB irradiation. For the second curing step by gamma or EB irradiation preferably a dose of 20 to 100 kGy is applied, more preferably a dose of 40 to 80 kGy is applied.

For the second curing step, thermal curing is preferred. The thermal curing is preferably performed at a temperature between 50 and 100°C, more preferably between 60 and 90°C. The thermal curing is preferably performed for a period between 2 and 48 hours, e.g. between 8 and 16 hours, e.g. about 10 hours. Optionally after the first curing step a polymer foil is applied to the cation exchange membrane before winding (this reduces oxygen inhibition and/or sticking of the cation exchange membrane onto itself).

Preferably the process according to the third aspect of the present invention is performed in the presence of a porous support. For example, the composition is present in and/or on a porous support when it is cured. The porous support provides mechanical strength to the cation exchange membrane resulting from curing the composition.

As examples of porous supports which may be used there may be mentioned woven and non-woven synthetic fabrics and extruded films. Examples include wetlaid and drylaid non-woven material, spunbond and meltblown fabrics and nanofiber webs made from, e.g. polyethylene, polypropylene, polyacrylonitrile, polyvinyl chloride, polyphenylenesulphide, polyester, polyamide, polyaryletherketones such as polyether ether ketone and copolymers thereof. Porous supports may also be porous membranes, e.g. polysulphone, polyethersulphone, polyphenylenesulphone, polyphenylenesulphide, polyimide, polyethermide, polyamide, polyamideimide, polyacrylonitrile, polycarbonate, polyacrylate, cellulose acetate, polypropylene, poly(4-methyl 1-pentene), polyinylidene fluoride, polytetrafluoroethylene, polyhexafluoropropylene and polychlorotrifluoroethylene membranes and derivatives thereof.

The porous support preferably has an average thickness of between 10 and 800µm, more preferably between 15 and 300µm, especially between 20 and 150µm, more especially between 30 and 130µm, e.g. around 60µm or around 100µm.

Preferably the porous support has a porosity of 30 and 95%. The porosity of the porous support may be calculated from thickness and weight (g/m²) and fiber density (g/m³) data.

The porous support, when present, may be treated to modify its surface energy, e.g. to values above 45 mN/m, preferably above 55mN/m. Suitable treatments include corona discharge treatment, plasma glow discharge treatment, flame treatment, ultraviolet light irradiation treatment and chemical treatment, e.g. for the purpose of improving the wettability of and the adhesiveness to the porous support to the cation exchange membrane.

Commercially available porous supports are available from a number of sources, e.g. from Freudenberg Filtration Technologies (Novatexx materials), Lydall Performance Materials, Celgard LLC, APorous Inc., SWM (Conwed Plastics, DelStar Technologies), Teijin, Hirose, Mitsubishi Paper Mills Ltd and Sefar AG.

Preferably the porous support is a porous polymeric support. Preferably the porous support is a woven or non-woven synthetic fabric or an extruded film without covalently bound ionic groups.

In a preferred process according to the third aspect of the present invention, the composition may be applied continuously to a moving (porous) support, preferably by means of a manufacturing unit comprising a composition application station, one or more irradiation source(s) for curing the composition, a membrane collecting station and a means for moving the support from the composition application station to the irradiation source(s) and to the membrane collecting station.

The composition application station may be located at an upstream position relative to the irradiation source(s) and the irradiation source(s) is/are located at an upstream position relative to the membrane collecting station.

Examples of suitable coating techniques for applying the composition to a porous support include slot die coating, slide coating, air knife coating, roller coating, screen-printing, and dipping. Depending on the used technique and the desired end specifications, it might be desirable to remove excess coating from the substrate by, for example, roll-to-roll squeeze, roll-to-blade or blade-to-roll squeeze, blade-to-blade squeeze or removal using coating bars. Curing by light is preferably done for the first curing step, preferably at a wavelength between 300 nm and 800 nm using a dose between 40 and 20,000 mJ/cm². In some cases additional drying might be needed for which temperatures between 40°C and 200°C could be employed. When gamma or EB curing is used irradiation may take place under low oxygen conditions, e.g. below 200 ppm oxygen.

The CEM of the present invention may be used for generating acids and bases, e.g. in a bipolar membrane electrodialysis stack, for treatment of polar liquids, e.g. for removal of salts, or for the generation of electricity, e.g. in fuel cells and redox flow batteries.

### Examples

In the following, non-limiting examples, all parts and percentages are by weight unless specified otherwise.

### Measurement of Electrical Resistance (ER)

ER (ohm.cm²) of the CEMs prepared in the Examples was measured by the method described by Dlugolecki et al., J. of Membrane Science, 319 (2008) on page 217-218 with the following modifications:
- the auxiliary membranes were CMX and AMX from Tokuyama Soda, Japan;
- the capillaries as well as the Ag/AgCl references electrodes (Metrohm type 6.0750.100) contained 3M KCl;
- the calibration liquid and the liquid in compartment 2, 3, 4 and 5 was 0.5 M NaCl solution at 25°C;
- the effective membrane area was 9.62 cm²;
- the distance between the capillaries was 5.0 mm;
- the measuring temperature was 25°C;
- a Cole Parmer Masterflex console drive (77521-47) with easy load II model 77200-62 gear pumps was used for all compartments;
- the flowrate of each stream was 475 ml/min controlled by Porter Instrument flowmeters (type 150AV-B250-4RVS) and Cole Parmer flowmeters (type G-30217-90); and

▪ the samples were equilibrated for at least 1 hour at room temperature in a 0.5 M solution of NaCl prior to measurement.

An ER of 15 Ωcm² or lower was deemed to be a pass and an ER of 15.1 Ωcm² or higher was deemed to be a fail.

### Measurement of Permselectivity (PSᵢ)

The permselectivity PSᵢ (%) that is the selectivity to the passage of ions of opposite charge to that of the CEMs prepared in the examples, was measured as follows. The CEM to be analysed was placed in a two-compartment system. One compartment is filled with a 0.05M solution of NaOH and the other with a 0.5M solution of NaOH.

### Settings

- the capillaries as well as the Ag/AgCl reference electrodes (Metrohm type 6.0750.100) contained 3M KCl;
- the effective cation exchange membrane area was 9.62 cm²;
- the distance between the capillaries was ca 15 mm;
- the measuring temperature was 21.0 ±0.2°C;
- a Cole Parmer Masterflex console drive (77521-47) with easy load II model 77200-62 gear pumps was used for the two compartments;
- Porter Instrument flowmeters (type 150AV-B250-4RVS) and Cole Parmer flowmeters (type G-30217-90) were used to control the flow constant at 500 ml/min;
- the samples were equilibrated for 1 hr in a 0.5M NaOH solution prior to measurement. The voltage was read from a regular VOM (multitester) after 20 minutes.

A PSᵢ of 85% or higher was deemed to be a pass and a PSᵢ below 85% was deemed to be a fail. In addition a 'membrane stress test' was performed as described below to give the permselectivity after the CEM had been aged (PS_{f}).

### Mechanical strength (Brittleness)

A sample of the CEM under test was swollen in water for at least 1 h at room temperature and a piece of 15 x 100 mm is cut out. The sample was clamped in a Zwick ProLine Z010 tensile meter with a distance between the clamping points of 100 mm. The force, expressed as E-modulus, was measured with a speed of 30 mm/min in position-controlled mode.
The thickness of the wet CEM sample was measured with TMI digit micrometer model: 49-58-00-0001 with 2 kg force.

### Composition stability

50 g of each composition was placed in a glass bottle and the bottle was closed tightly to prevent solvent evaporation. The composition present in the bottle was monitored visually until a phase separation occurred. Compositions which showed no phase separation after 45 minutes were deemed to be stable. If phase separation was observed within 45 minutes the composition was deemed to be unstable.

### Membrane 'stress' test

In order to simulate an ageing process, the permselectivity of the CEMs was determined before (PSᵢ) and after immersion in deionized water at room temperature (22°C) for a period of 48 h and equilibration (PS_{f}). A value of PS_{f} of 85% or higher was deemed to be a pass and a value of less than 85% was deemed to be a fail.

### Examples Ex.1 to Ex.9 and Comparative Examples CEx.1 to CEx.8

**Table 1 ingredients**

| Abbreviation | Component Type | Description/supplier |
|---|---|---|
| XL-B | (a) | Benzenesulphonamide, 4-ethenyl-N-[(4-ethenylphenyl)sulphonyl]-, lithium salt |
| XL-D | (a) | Benzenesulphonamide, 2,4-diethenyl-N-(methylsulphonyl)-, lithium salt |
| Krasol^{®} 2000 | (b) | Krasol^{®} LBH P 2000, polybutadiene polymer having an MW of 2100 g/mol and a viscosity at 25°C of 13 Pa.s from Cray Valley |
| Ricon^{®} 156 | (b) | Polybutadiene resin having an MW of 1400 g/mol and a viscosity at 25°C of 1.6 Pa.s from Cray Valley |
| DVB | (c) | Divinylbenzene from Sigma-Aldrich |
| BDT | (c) | 1,4-Benzenedimethanethiol from Carbone Scientific Co. Ltd |
| LAP | (e) | phenyl-2,4,6-trimethylbenzoylphosphinate, lithium salt from Sigma-Aldrich |
| TPO-L | (e) | ethyl(2,4,6-trimethylbenzoyl)-phenyl phosphinate from IGM Resins |
| V-59 | (e) | 2,2'-azobis(2-methylbutyronitrile) from FUJIFILM Wako Chemicals |
| PGME | (f) | Propylene glycol methyl ether (1-methoxy-2-propanol), from Sigma-Aldrich |
| PW | (f) | Deionized water |
| 4OH-TEMPO | | 4-hydroxy-2,2,6,6-tetramethylpiperidin-1-oxyl, from Sigma-Aldrich, 2% solution in water |
| FO2223-10 | support | Nonwoven porous support from Freudenberg Filtration Technologies |

Components (a) were prepared as described below.

### CI-SS

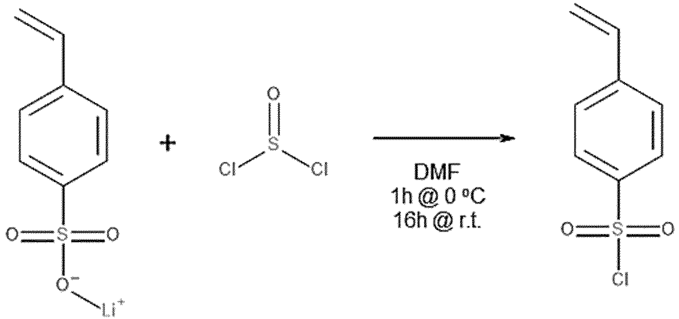

Thionyl chloride (109 mL, 178.46 g, 1.5 mol, 3 moleq) was added dropwise to a solution of 4-vinylbenzenesulphonic acid lithium salt (95.08 g, 0.500 mol, 1 moleq) and 4OH-TEMPO (50 mg, 500 ppm) in dimethylformamide (DMF) (300 mL) in a double-walled reactor that was actively cooled to 5°C. After the addition was completed, the solution was allowed to slowly heat to room temperature and was stirred for another 16 hours. Then the reaction mixture was poured into 1 liter of cold 1M KCI in a separation funnel. The bottom layer was removed and dissolved in 500 mL diethylether. This solution was washed with a 1M KCI-solution (300 mL). The organic layer was dried over sodium sulphate, filtered and concentrated in vacuo to give a yellow oil. The crude product was used without further purification in the next step. Typical yield was 89.5 g (88%). HPLC-MS purity > 98%; ¹H-NMR: <2 wt% DMF, 0% diethyl ether.

### CI-DVBS

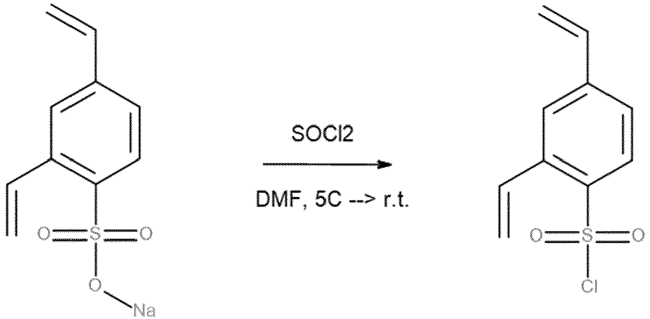

Thionyl chloride (75 mL, 123.1 g, 1.034 mol, 3 moleq) was added dropwise to an solution of divinylbenzene sulphonate sodium salt (80 g, 0.345 mol, 1 moleq) and 4OH-TEMPO (50 mg, 500 ppm) in DMF (300 mL) in a double-walled reactor that was actively cooled to 5°C. After the addition was completed, the solution was allowed to slowly heat to room temperature and was stirred for another 16 hours. Then the reaction mixture was poured into 1 liter of cold 1M KCI in a separation funnel. The bottom layer was removed and dissolved in 500 mL diethylether. This solution was washed with a 1M KCI-solution (300 mL). The organic layer was dried over sodium sulphate, filtered and concentrated in vacuo to give a yellow oil. The crude product was used without further purification in the next step. Typical yield was 62 g (79%). HPLC-MS purity > 98%; ¹H-NMR: <2 wt% DMF, 0% diethyl ether.

### NH2-SS

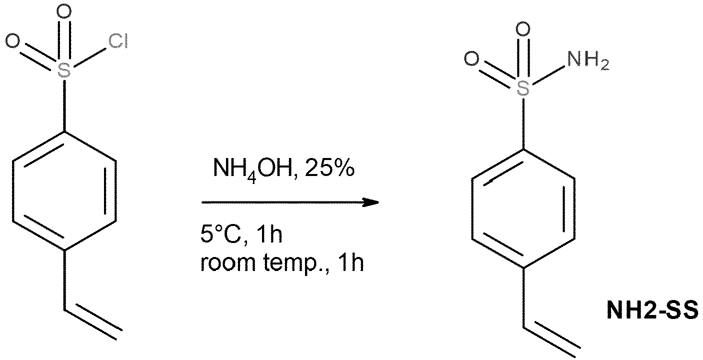

Thionyl chloride (109 mL, 178.46 g, 1.5 mol, 3 moleq) was added dropwise to a solution of 4-vinylbenzene-sulphonic acid lithium salt (95.08 g, 0.500 mol, 1 moleq) and 4OH-TEMPO (50 mg, 500 ppm) in DMF (300 mL) in a double-walled reactor that was actively cooled to 5°C. After the addition was completed, the solution was allowed to slowly heat to room temperature and was stirred for another 16 hours. Then the reaction mixture was poured into 1 liter of cold 1M KCI in a separation funnel. The bottom layer was removed and was added dropwise to a solution of ammonium hydroxide 25% in water (250 mL, 3.67 mol, 15 moleq) and 4OH-TEMPO (50 mg, 500 ppm) in a double-walled reactor that was actively cooled to 5°C. After the addition was completed, the solution was stirred for 1 hour. The solution was then allowed to heat to room temperature and was stirred for one hour. Then the reaction mixture was cooled back to 5°C and the product was filtered off and washed with 50 mL of cold water. The product was dried overnight in vacuo at 30°C and used without further purification. Typical yield was 66.8 g (73%). HPLC-MS purity > 95%.

### XL-B

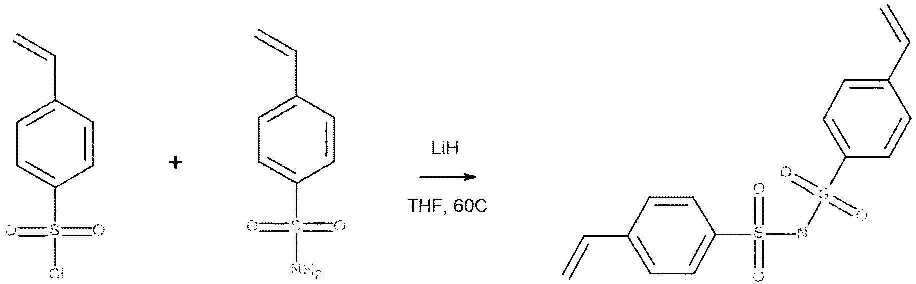

Before the synthesis, vinylbenzene sulphonamide (NH2-SS) was dried in a vacuum oven overnight (30°C, vac). To a solution of the dried vinylbenzene sulphonamide (11.12 g, 0.061 mol, 1 moleq) and 4OH-TEMPO (30 mg, 500 ppm) in tetrahydrofuran (THF) (100 mL) was added lithiumhydride (LiH) (1.06 g, 0.134 mol, 2.2 moleq) as a solid at once. The reaction mixture was stirred for 30 minutes at room temperature. Then, a solution of CI-SS (12.3 g, 0.061 mol, 1 moleq) in THF (50 mL) was added to the reaction mixture. After addition, the reaction mixture was heated to 60°C (water bath temperature). After two days, the reaction mixture was filtrated over celite to remove the excess of LiH. Celite was added and the resulting slurry was stirred for 5 minutes. Then, the celite was filtered off and washed with 100 mL ethyl acetate. The solvent was then evaporated in vacuo and the resulting white foam was washed with 500 mL diethyl ether overnight. The resulting white powder was filtered off and dried in a vacuum oven at 30°C for 16h yielding a white solid. Typical yield was 11 g (51%). HPLC-MS purity > 94%; ¹H-NMR:<1 wt% residual solvents, <5 wt% styrene sulphonate or styrene sulphonamide; ICP-OES: 21-26 g Li/kg product.

### XL-D

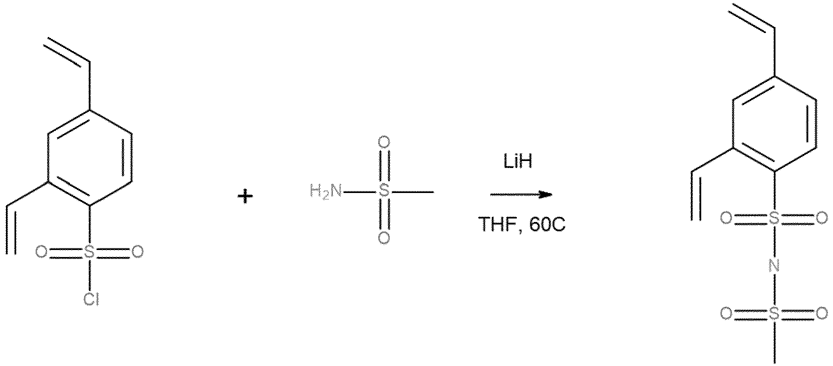

Before the synthesis, methane sulphonamide was dried in a vacuum oven overnight (30°C, vac). To a solution of the dried methane sulphonamide (8.32 g, 0.087 mol, 1 moleq) and 4OH-TEMPO (30 mg, 500 ppm) in THF (100 mL) was added LiH (1.53 g, 0.192 mol, 2.2 moleq) as a solid at once. The reaction mixture was stirred for 30 minutes at room temperature. Then, a solution of CI-DVBS (20 g, 0.087 mol, 1 moleq) in THF (50 mL) was added to the reaction mixture. After addition, the reaction mixture was heated to 60°C (water bath temperature). After two days, the reaction mixture was filtrated over celite to remove the excess of LiH. The filtrate was concentrated in vacuo to give a light-yellow foam. The resulting foam was dissolved in 500 mL ethyl acetate. Celite was added and the resulting slurry was stirred for 5 minutes. Then, the celite was filtered off and washed with 100 mL ethyl acetate. This Celite procedure was then repeated. The solvent was then evaporated in vacuo and the resulting white foam was washed with 500 mL diethyl ether overnight. The resulting white powder was filtered off and dried in a vacuum oven at 30°C for 16h yielding a hygroscopic white solid. Typical achieved yield wa 15.5 g (60%). HPLC-MS purity > 95%; ¹H-NMR: <3 wt% residual solvents; 2wt% divinylbenzene sulphonate; ICP-OES: 24-30 g Li/kg product.

### Preparation

CEMs according to the first aspect of the present invention and Comparative CEMs were prepared as follows: each of the compositions described in Table 2 below were applied to an aluminum plate using a 100 µm Mayer bar. A FO2223-10 porous support from Freudenberg Filtration Technologies was applied on top and excess of composition was removed using a 4µm Mayer bar. The composition was then cured by the methods indicated in Table 2. UV curing was performed by placing the porous supports comprising composition on a conveyor moving at a speed of 5 m/min equipped with a D-bulb and exposing the porous supports comprising composition to UV radiation. In all cases, UV-curing or EB curing was applied as the first curing step and thermal curing or EB curing as second curing step. EB curing was performed by placing the porous supports comprising composition on a conveyor and flushing the whole system with nitrogen. An electron beam of 200 KeV was applied. The dose of electron beam was varied by adjusting the conveyor speed. A dose of 100 kGy was applied when EB was selected as first curing step. The dose was reduced to 80 kGy when EB was used as a second curing step. Thermal curing was performed by placing the porous supports comprising irradiated composition, packed in a vacuumized and sealed plastic bag, in an oven set at 90°C for 10h. This formed a CEM of thickness about 100µm. After preparation of the CEMs the CEMs were placed in sealed aluminum bags and stored at room temperature (20°C) prior to performing the tests indicated in Table 2 below.

**Table 2 - Compositions, CEMs and Results**

| **Component** | **type** | **Ex.1** | **Ex.2** | **Ex.3** | **Ex.4** | **Ex.5** | **Ex.6** | **Ex.7** | **Ex.8** | **Ex.9** |
|---|---|---|---|---|---|---|---|---|---|---|
| XL-B | (a) | 60.59 | 60.59 | 60.59 | 58.17 | 60.59 | 60.59 | 60.59 | 60.59 | |
| XL-D | (a) | | | | | | | | | 60.59 |
| Krasol^{®} 2000 | (b) | 4.18 | 6.28 | 8.37 | 5.34 | 9.41 | 1.00 | 8.37 | | 8.37 |
| Ricon^{®} 156 | (b) | | | | | | | | 8.37 | |
| DVB | (c) | 8.37 | 6.27 | 4.18 | 10.69 | 3.14 | 2.00 | | 4.18 | 4.18 |
| BDT | (c) | | | | | | | 4.18 | | |
| TEMPO (2% in water) | | 0.96 | 0.96 | 0.96 | 0.93 | 0.96 | 0.96 | 0.96 | 0.96 | 0.96 |
| V-59 | (e) | 0.96 | 0.96 | 0.96 | 0.93 | 0.96 | 0.96 | 0.96 | 0.96 | 0.96 |
| TPO-L | (e) | 0.48 | 0.48 | 0.48 | 0.46 | 0.48 | 0.48 | 0.48 | 0.48 | 0.48 |
| LAP | (e) | 0.48 | 0.48 | 0.48 | 0.46 | 0.48 | 0.48 | 0.48 | 0.48 | 0.48 |
| PW | (f) | 18.67 | 18.67 | 18.67 | 17.92 | 18.67 | 28.22 | 18.67 | 18.67 | 18.67 |
| PGME | (f) | 5.31 | 5.31 | 5.31 | 5.10 | 5.31 | 5.31 | 5.31 | 5.31 | 5.31 |
| **Curing methods** | | UV + T* | UV + T* | UV + T* | UV + T* | UV + T* | UV + T* | UV + T* | UV + T* | UV + T* |
| **Properties** | | | | | | | | | | |
| wt% (b)+(c) | | 12.55 | 12.55 | 12.55 | 16.03 | 12.55 | 3.00 | 12.55 | 12.55 | 12.55 |
| wt ratio (b)/(c) | | 0.50 | 1.00 | 2.00 | 0.50 | 3.00 | 0.50 | 2.00 | 2.00 | 2.00 |
| molar ratio (b)/(c) | | 0.03 | 0.07 | 0.13 | 0.03 | 0.20 | 0.03 | 0.17 | 0.19 | 0.13 |
| wt ratio (a)/((b)+(c)) | | 4.83 | 4.83 | 4.83 | 3.63 | 4.83 | 20.20 | 4.83 | 4.83 | 4.83 |
| molar ratio (a)/((b)+(c)) | | 2.57 | 3.32 | 4.70 | 1.93 | 5.92 | 10.75 | 5.93 | 4.48 | 5.69 |
| PSᵢ NaOH 0.05 - 0.5M (%) | | 96 | 96 | 93 | 98 | 96 | 90 | 96 | 97 | 96 |
| PS_{f} (NaOH 0.05 - 0.5 M) (%) | | 92 | 92 | 90 | 94 | 92 | 86 | 93 | 94 | 93 |
| ER 0.5 N NaCl (Ω.cm²) | | 6.6 | 7.0 | 7.9 | 9.1 | 7.1 | 5.1 | 7.1 | 6.8 | 7.5 |
| Composition stability | | > 45 | > 45 | > 45 | > 45 | > 45 | > 45 | > 45 | > 45 | > 45 |
| E-modulus MD dry (N/m²) | | 1423 | 1485 | 1521 | 1433 | 1530 | 1415 | 1435 | 1476 | 1501 |
| E-modulus MD wet (N/m²) | | 866 | 923 | 955 | 885 | 935 | 845 | 911 | 888 | 902 |
| E-modulus CD dry (N/m²) | | 1397 | 1456 | 1489 | 1412 | 1496 | 1376 | 1405 | 1398 | 1489 |
| E-modulus CD wet (N/m²) | | 670 | 736 | 775 | 695 | 784 | 651 | 687 | 705 | 756 |

**Table 2 - Compositions, CEMs and Results (continued)**

| **Component** | **type** | **CEx.1** | **CEx.2** | **CEx.3** | **CEx.4** | **CEx.5** | **CEx.6** | **CEx.7** | **CEx.8** |
|---|---|---|---|---|---|---|---|---|---|
| XL-B | (a) | 60.59 | 58.17 | 55.41 | 55.41 | 60.59 | 58.17 | 55.40 | 64.00 |
| XL-D | (a) | | | | | | | | |
| Krasol^{®} 2000 | (b) | | | | | 12.55 | 16.03 | 22.03 | |
| Ricon^{®} 156 | (b) | | | | | | | | |
| DVB | (c) | 12.55 | 16.03 | 20.03 | 22.03 | | | | |
| BDT | (c) | | | | | | | | |
| TEMPO (2% in PW) | | 0.96 | 0.93 | 0.88 | 0.88 | 0.96 | 0.93 | 0.88 | 0.96 |
| V-59 | (e) | 0.96 | 0.93 | 0.88 | 0.88 | 0.96 | 0.93 | 0.88 | 0.96 |
| TPO-L | (e) | 0.48 | 0.46 | 0.44 | 0.44 | 0.48 | 0.46 | 0.44 | 0.48 |
| LAP | (e) | 0.48 | 0.46 | 0.44 | 0.44 | 0.48 | 0.46 | 0.44 | 0.48 |
| water | (f) | 18.67 | 17.92 | 17.07 | 15.07 | 18.67 | 17.92 | 15.08 | 27.81 |
| PGME | (f) | 5.31 | 5.10 | 4.85 | 4.85 | 5.31 | 5.10 | 4.85 | 5.31 |
| **Curing methods** | | UV + T* | UV + T* | UV + T* | UV + T* | UV + T* | UV + T* | UV + T* | UV |
| **Properties** | | | | | | | | | |
| wt% (b)+(c) | | 12.55 | 16.03 | 20.03 | 22.03 | 12.55 | 16.03 | 22.03 | 0.00 |
| wt ratio (b)/(c) | | 0.00 | 0.00 | 0.00 | 0.00 | - | - | - | - |
| molar ratio (b)/(c) | | - | - | - | - | - | - | - | - |
| wt ratio (a)/((b)+(c)) | | 4.83 | 3.63 | 2.77 | 2.52 | 4.83 | 3.63 | 2.51 | - |
| molar ratio (a)/((b)+(c)) | | 1.77 | 1.33 | 1.01 | 0.92 | 27.17 | 20.42 | 14.15 | - |
| PSᵢ NaOH 0.05 - 0.5 M (%) | | 96 | 97 | 98 | 99 | 93 | 98 | 99 | 83 |
| PS_{f} (NaOH 0.05 - 0.5 M) (%) | | 94 | 95 | 96 | 99 | 91 | 96 | 99 | 71 |
| ER 0.5 N NaCl (Ω.cm²) | | 4.9 | 5.4 | 5.2 | 21.8 | 5.5 | 8.8 | 19.8 | 1.8 |
| Composition stability | | > 45 | > 45 | > 45 | > 45 | < 15 | < 15 | < 15 | > 45 |
| E-modulus MD dry (N/m²) | | 1313 | 1288 | 1256 | 1145 | 1534 | 1552 | 1560 | 1103 |
| E-modulus MD wet (N/m²) | | 788 | 736 | 712 | 624 | 943 | 952 | 971 | 585 |
| E-modulus CD dry (N/m²) | | 1219 | 1175 | 1135 | 1056 | 1498 | 1503 | 1524 | 1028 |
| E-modulus CD wet (N/m²) | | 638 | 602 | 550 | 495 | 791 | 801 | 824 | 423 |

| | | | | | | | | | |
|---|---|---|---|---|---|---|---|---|---|
| T* is thermal curing CD means coating direction, i.e. the direction by which the CEM moves through the coating machine, MD means machine direction, i.e. the direction perpendicular to the coating direction. | | | | | | | | | |

In this set of experiments an E-modulus MD dry of 1350 N/m² or higher was deemed to be a pass and an E-modulus MD dry lower 1350 N/m² was deemed to be a fail. An E-modulus MD wet of 800 N/m² or higher was deemed to be a pass and an E-modulus MD wet lower than 800N/m² was deemed to be a fail. An E-modulus CD dry of 1250 N/m² or higher was deemed to be a pass and an E-modulus CD dry lower than 1250N/m² was deemed to be a fail. An E-modulus CD wet of 640N/m² or higher was deemed to be a pass and an E-modulus CD wet lower than 640 N/m² was deemed to be a fail. The E-modulus values are relative and can only be compared with each other if the same porous support is used in the examples.
From the results in Table 2 one can see that:
The CEMs of Comparative Examples CEx.1 to CEx.4 had lower mechanical strength (more brittle) than the CEMs of Examples Ex.1 to Ex.9 of the invention.
The CEMs of Comparative Examples CEx.4 and CEx.7 had a very high ER.
The compositions used to make Comparative Examples CEx.5 to CEx.7 were unstable.
The CEMs of Comparative Example CEx.8 suffered from a low PS and lower E-modulus (indicating higher brittleness).

## Claims

1. A cation exchange membrane obtainable by curing a composition comprising:
(a) 40 to 70wt% of a first crosslinking agent comprising an anionic group and at least two polymerisable groups;
(b) 1 to 15wt% of a second crosslinking agent comprising at least 5 and less than 75 vinyl groups and being free from ionic groups; and
(c) 2 to 20wt% of a third crosslinking agent comprising 2, 3 or 4 polymerisable groups and being free from ionic groups.

2. The cation exchange membrane according to claim 1 wherein the first crosslinking agent comprises a bissulphonylimide group as anionic group.

3. The cation exchange membrane according to any one of the preceding claims wherein the polymerisable groups of the first crosslinking agent are vinyl groups, and the polymerisable groups of the third crosslinking agent are selected from vinyl groups and thiol groups.

4. The cation exchange membrane according to any one of the preceding claims wherein the first crosslinking agent comprises an C₆-C₁₀-aryl group, preferably a phenyl group.

5. The cation exchange membrane according to any one of the preceding claims wherein the second crosslinking agent has a molecular weight of between 1,000 and 5,000 Da, and the third crosslinking agent has a molecular weight of less than 500 Da.

6. The cation exchange membrane according to any one of the preceding claims wherein the second crosslinking agent comprises at least 8 and less than 60 vinyl groups.

7. The cation exchange membrane according to any one of the preceding claims wherein the second crosslinking agent is a curable compound of Formula (III):
R'-Aₙ-Bₘ-C_{q}-R' Formula (III)
wherein:
A is [CH₂CH=CHCH₂];
B is [CH₂CH(CH=CH₂)];
C is [CH₂CH(C₆H₅)];
n has a value of from 5 to 80% of the sum of (n+m+q);
m has a value of from 20 to 95% of the sum of (n+m+q);
q has a value of from 0 to 30% of the sum of (n+m+q); and
each R' independently is H or OH;
provided that the curable compound of Formula (III) comprises at least 5 and less than 75 vinyl groups and is free from ionic groups.

8. The cation exchange membrane according to any one of the preceding claims wherein the weight ratio of component (b) to component (c) is in the range 0.2 to 5; and the weight ratio of component (a) to the sum of component (b) and component (c) is in the range 3 to 25.

9. The cation exchange membrane according to any one of the preceding claims wherein the molar ratio of component (b) to component (c) is in the range 0.01 to 0.5; and the molar ratio of component (a) to the sum of component (b) and component (c) is in the range 2 to 12.

10. A composition comprising:
(a) 40 to 70wt% of a first crosslinking agent comprising an anionic group and at least two polymerisable groups;
(b) 1 to 15wt% of a second crosslinking agent comprising at least 5 and less than 75 vinyl groups and being free from ionic groups;
(c) 2 to 20wt% of a third crosslinking agent comprising 2, 3 or 4 polymerisable groups and being free from ionic groups;
(d) 0 to 40 wt% of a compound comprising one and only one polymerisable group;
(e) 0 to 10 wt% of a radical initiator; and
(f) 0 to 40 wt% of a solvent.

11. The composition according to claim 10 wherein the weight ratio of component (b) to component (c) is in the range 0.2 to 5; and the weight ratio of component (a) to the sum of component (b) and component (c) is in the range 3 to 25.

12. The composition according to claims 10 wherein the molar ratio of component (b) to component (c) is in the range 0.01 to 0.5; and the molar ratio of component (a) to the sum of component (b) and component (c) is in the range 2 to 12.

13. A process for preparing a cation exchange membrane comprising curing a composition to form the CEM, wherein the composition is as defined in any one of claims 10 to 12.

14. A bipolar electrodialysis stack, an electrodialysis stack, an electrodeionization stack, a reverse electrodialysis stack or a fuel cell comprising a cation exchange membrane according to any one of claims 1 to 9.

15. Use of a cation exchange membrane according to claims 1 to 9 for the treatment of polar liquids, for the removal of salts or for the generation of electricity.

## Patentansprüche

1. Kationenaustauschermembran, erhaltbar durch Härten einer Zusammensetzung, die Folgendes umfasst:
(a) 40 bis 70 Gew.-% eines ersten Vernetzungsmittels, das eine anionische Gruppe und mindestens zwei polymerisierbare Gruppen umfasst;
(b) 1 bis 15 Gew.-% eines zweiten Vernetzungsmittels, das mindestens 5 und weniger als 75 Vinylgruppen umfasst und frei von ionischen Gruppen ist; und
(c) 2 bis 20 Gew.-% eines dritten Vernetzungsmittels, das 2, 3 oder 4 polymerisierbare Gruppen umfasst und frei von ionischen Gruppen ist.

2. Kationenaustauschermembran nach Anspruch 1, wobei das erste Vernetzungsmittel eine Bissulfonylimidgruppe als anionische Gruppe umfasst.

3. Kationenaustauschermembran nach einem der vorhergehenden Ansprüche, wobei die polymerisierbaren Gruppen des ersten Vernetzungsmittels Vinylgruppen sind und die polymerisierbaren Gruppen des dritten Vernetzungsmittels ausgewählt sind aus Vinylgruppen und Thiolgruppen.

4. Kationenaustauschermembran nach einem der vorhergehenden Ansprüche, wobei das erste Vernetzungsmittel eine C₆-C₁₀-Arylgruppe, bevorzugt eine Phenylgruppe, umfasst.

5. Kationenaustauschermembran nach einem der vorhergehenden Ansprüche, wobei das zweite Vernetzungsmittel ein Molekulargewicht zwischen 1.000 und 5.000 Da aufweist und das dritte Vernetzungsmittel ein Molekulargewicht von weniger als 500 Da aufweist.

6. Kationenaustauschermembran nach einem der vorhergehenden Ansprüche, wobei das zweite Vernetzungsmittel mindestens 8 und weniger als 60 Vinylgruppen umfasst.

7. Kationenaustauschermembran nach einem der vorhergehenden Ansprüche, wobei das zweite Vernetzungsmittel eine härtbare Verbindung der Formel (III) ist:
R'-Aₙ-Bₘ-C_{q}-R' Formel (III)
wobei:
A [CH₂CH=CHCH₂] ist;
B [CH₂CH(CH=CH₂)] ist;
C [CH₂CH(C₆H₅)] ist;
n einen Wert von 5 bis 80 % der Summe von (n+m+q) aufweist;
m einen Wert von 20 bis 95 % der Summe von (n+m+q) aufweist;
q einen Wert von 0 bis 30 % der Summe von (n+m+q) aufweist; und
jedes R' unabhängig H oder OH ist;
vorausgesetzt, dass die härtbare Verbindung der Formel (III) mindestens 5 und weniger als 75 Vinylgruppen umfasst und frei von ionischen Gruppen ist.

8. Kationenaustauschermembran nach einem der vorhergehenden Ansprüche, wobei das Gewichtsverhältnis von Komponente (b) zu Komponente (c) im Bereich von 0,2 bis 5 liegt; und das Gewichtsverhältnis von Komponente (a) zur Summe aus Komponente (b) und Komponente (c) im Bereich von 3 bis 25 liegt.

9. Kationenaustauschermembran nach einem der vorhergehenden Ansprüche, wobei das Molverhältnis von Komponente (b) zu Komponente (c) im Bereich von 0,01 bis 0,5 liegt; und das Molverhältnis von Komponente (a) zur Summe aus Komponente (b) und Komponente (c) im Bereich von 2 bis 12 liegt.

10. Zusammensetzung, umfassend:
(a) 40 bis 70 Gew.-% eines ersten Vernetzungsmittels, das eine anionische Gruppe und mindestens zwei polymerisierbare Gruppen umfasst;
(b) 1 bis 15 Gew.-% eines zweiten Vernetzungsmittels, das mindestens 5 und weniger als 75 Vinylgruppen umfasst und frei von ionischen Gruppen ist;
(c) 2 bis 20 Gew.-% eines dritten Vernetzungsmittels, das 2, 3 oder 4 polymerisierbare Gruppen umfasst und frei von ionischen Gruppen ist;
(d) 0 bis 40 Gew.-% einer Verbindung, die eine und nur eine polymerisierbare Gruppe umfasst;
(e) 0 bis 10 Gew.-% eines Radikalinitiators; und
(f) 0 bis 40 Gew.-% eines Lösungsmittels.

11. Zusammensetzung nach Anspruch 10, wobei das Gewichtsverhältnis von Komponente (b) zu Komponente (c) im Bereich von 0,2 bis 5 liegt; und das Gewichtsverhältnis von Komponente (a) zur Summe aus Komponente (b) und Komponente (c) im Bereich von 3 bis 25 liegt.

12. Zusammensetzung nach Anspruch 10, wobei das Molverhältnis von Komponente (b) zu Komponente (c) im Bereich von 0,01 bis 0,5 liegt; und das Molverhältnis von Komponente (a) zur Summe aus Komponente (b) und Komponente (c) im Bereich von 2 bis 12 liegt.

13. Verfahren zum Herstellen einer Kationenaustauschermembran, umfassend Härten einer Zusammensetzung, um die CEM auszubilden, wobei die Zusammensetzung wie in einem der Ansprüche 10 bis 12 definiert ist.

14. Bipolarelektrodialysestapel, Elektrodialysestapel, Elektrodeionisationsstapel, Umkehrelektrodialysestapel oder Brennstoffzelle, umfassend eine Kationenaustauschermembran nach einem der Ansprüche 1 bis 9.

15. Verwendung einer Kationenaustauschermembran nach den Ansprüchen 1 bis 9 zur Behandlung von polaren Flüssigkeiten, zur Entfernung von Salzen oder zur Erzeugung von Elektrizität.

## Revendications

1. Membrane échangeuse de cations pouvant être obtenue par durcissement d'une composition comprenant :
(a) 40 à 70 % en poids d'un premier agent de réticulation comprenant un groupe anionique et au moins deux groupes polymérisables ;
(b) 1 à 15 % en poids d'un deuxième agent de réticulation comprenant au moins 5 et moins de 75 groupes vinyle et étant exempt de groupes ioniques ; et
(c) 2 à 20 % en poids d'un troisième agent de réticulation comprenant 2, 3 ou 4 groupes polymérisables et étant exempt de groupes ioniques.

2. Membrane échangeuse de cations selon la revendication 1, dans laquelle le premier agent de réticulation comprend un groupe bissulfonylimide en tant que groupe anionique.

3. Membrane échangeuse de cations selon l'une quelconque des revendications précédentes, dans laquelle les groupes polymérisables du premier agent de réticulation sont des groupes vinyle, et les groupes polymérisables du troisième agent de réticulation sont choisis parmi des groupes vinyle et des groupes thiol.

4. Membrane échangeuse de cations selon l'une quelconque des revendications précédentes, dans laquelle le premier agent de réticulation comprend un groupe aryle en C₆-C₁₀, de préférence un groupe phényle.

5. Membrane échangeuse de cations selon l'une quelconque des revendications précédentes, dans laquelle le deuxième agent de réticulation possède un poids moléculaire compris entre 1 000 et 5 000 Da, et le troisième agent de réticulation possède un poids moléculaire inférieur à 500 Da.

6. Membrane échangeuse de cations selon l'une quelconque des revendications précédentes, dans laquelle le deuxième agent de réticulation comprend au moins 8 et moins de 60 groupes vinyle.

7. Membrane échangeuse de cations selon l'une quelconque des revendications précédentes, dans laquelle le deuxième agent de réticulation est un composé durcissable de Formule (III) :
R'-Aₙ-Bₘ-C_{q}-R' Formule (III)
où:
A est [CH₂CH=CHCH₂];
B est [CH₂CH(CH=CH₂)] ;
C est [CH₂CH(C₆H₅)] ;
n possède une valeur comprise entre 5 et 80 % de la somme de (n+m+q) ;
m possède une valeur comprise entre 20 et 95 % de la somme de (n+m+q) ;
q possède une valeur comprise entre 0 et 30 % de la somme de (n+m+q) ; et
chaque R' est indépendamment H ou OH ;
à condition que le composé durcissable de Formule (III) comprenne au moins 5 et moins de 75 groupes vinyle et soit exempt de groupes ioniques.

8. Membrane échangeuse de cations selon l'une quelconque des revendications précédentes, dans laquelle le rapport pondéral du composant (b) au composant (c) est compris dans la plage de 0,2 à 5 ; et le rapport pondéral du composant (a) à la somme du composant (b) et du composant (c) est compris dans la plage de 3 à 25.

9. Membrane échangeuse de cations selon l'une quelconque des revendications précédentes, dans laquelle le rapport molaire du composant (b) au composant (c) est compris dans la plage de 0,01 à 0,5 ; et le rapport molaire du composant (a) à la somme du composant (b) et du composant (c) est compris dans la plage de 2 à 12.

10. Composition comprenant :
(a) 40 à 70 % en poids d'un premier agent de réticulation comprenant un groupe anionique et au moins deux groupes polymérisables ;
(b) 1 à 15 % en poids d'un deuxième agent de réticulation comprenant au moins 5 et moins de 75 groupes vinyle et étant exempt de groupes ioniques ;
(c) 2 à 20 % en poids d'un troisième agent de réticulation comprenant 2, 3 ou 4 groupes polymérisables et étant exempt de groupes ioniques ;
(d) 0 à 40 % en poids d'un composé comprenant un et seulement un groupe polymérisable ;
(e) 0 à 10 % en poids d'un initiateur de radicaux ; et
(f) 0 à 40 % en poids d'un solvant.

11. Composition selon la revendication 10, dans laquelle le rapport pondéral du composant (b) au composant (c) est compris dans la plage de 0,2 à 5 ; et le rapport pondéral du composant (a) à la somme du composant (b) et du composant (c) est compris dans la plage de 3 à 25.

12. Composition selon la revendication 10, dans laquelle le rapport molaire du composant (b) au composant (c) est compris dans la plage de 0,01 à 0,5 ; et le rapport molaire du composant (a) à la somme du composant (b) et du composant (c) est compris dans la plage de 2 à 12.

13. Processus permettant la préparation d'une membrane échangeuse de cations comprenant le durcissement d'une composition pour former la CEM, dans lequel la composition est telle que définie dans l'une quelconque des revendications 10 à 12.

14. Empilement d'électrodialyse bipolaire, empilement d'électrodialyse, empilement d'électrodéionisation, empilement d'électrodialyse inverse ou pile à combustible comprenant une membrane échangeuse de cations selon l'une quelconque des revendications 1 à 9.

15. Utilisation d'une membrane échangeuse de cations selon les revendications 1 à 9 pour le traitement de liquides polaires, pour l'élimination de sels ou pour la production d'électricité.
